# EUROPÄISCHE PATENTSCHRIFT

(11) **EP 2 944 985 B1**
(45) Veröffentlichungstag und Bekanntmachung des Hinweises auf die Patenterteilung: **31.01.2018**
(21) Anmeldenummer: 14167874.8
(22) Anmeldetag: 12.05.2014
(51) Int. Cl.: G01V 8/22, F16P 3/14, G01S 7/499, G01S 17/02, G01S 17/87

(54) **Reflexionslichtgitter**
Reflection light grid
Grille lumineuse à réflexion

(43) Veröffentlichungstag der Anmeldung: 18.11.2015
(73) Patentinhaber: SICK AG, 79183 Waldkirch (DE)
(72) Erfinder: Eble, Johannes, 79183 Waldkirch (DE); Bürger, Jürgen, 79331 Nimburg (DE)
(74) Vertreter: Rieger, Daniel-Stephan

(56) Entgegenhaltungen:
- EP-A1- 2 192 423
- EP-A1- 2 502 098
- EP-A2- 2 317 347
- DE-A1- 19 924 470
- US-A- 4 958 068

## Beschreibung

Die vorliegende Erfindung betrifft ein Reflexionslichtgitter mit mehreren Lichtsendern und mehreren Lichtempfängern in einem Gehäuse und einem gegenüberliegenden retroreflektierenden Reflektor, der eingehende Lichtstrahlen nahezu parallel zu Ihrer Einfallsrichtung zurückreflektiert, wobei der retroreflektierende Reflektor mindestens einen ersten Abschnitt aufweist und mindestens einen zweiten Abschnitt aufweist, wobei ein erster Lichtsender, ein erster Lichtempfänger und der erste Abschnitt des Reflektors eine Reflexionslichtschranke bilden und ein zweiter Lichtsender, ein zweiter Lichtempfänger und der zweite Abschnitt des Reflektors eine zweite Reflexionslichtschranke bilden.

Im Gegensatz zu Einstrahlsensoren, bei denen der gesamte Sensor ausgerichtet werden kann, muss bei einem Reflexionslichtgitter ein relativer Schielwinkel zwischen den Lichtsendern minimal gehalten werden, um einen Sensor mit ausreichender Messgenauigkeit zu gewährleisten. Eine vollständige Vermeidung des relativen Schielwinkels ist aufgrund von Bauteiltoleranzen jedoch nicht zu gewährleisten. Des Weiteren ist das Strahlenbündel eines Lichtsenders ab einem gewissen Abstand divergent, d. h. der Durchmesser des Lichtspots nimmt mit größer werdendem Abstand zu.

Ein Reflexionslichtgitter benötigt einen Reflektor mit entsprechender Länge, so dass alle Lichtsenderstrahlenbündel reflektiert werden. Nachteilig hierbei ist, dass dadurch der vollständige Lichtspot reflektiert wird. Abhängig vom Reflektorabstand und der Strahlbündeldivergenz wird dieser Lichtspot deutlich größer als die Senderlinse. Zusätzlich gibt es einen Versatz des Lichtspots aufgrund des Schielwinkels. Da der vollständige Lichtspot reflektiert wird, muss auch der vollständige Lichtspot von dem zu detektierenden Objekt abgedeckt werden. Die Genauigkeit und ein minimal detektierbares Objekt sind bei Verwendung eines herkömmlichen Reflektors daher abhängig von der Größe und der Lage des Senderlichtspots auf dem Reflektor, bzw. im Messfeld oder Überwachungsfeld.

Die EP 2 317 347 A2 offenbart einen optischen Sensor zur Erfassung von Objekten in einem Überwachungsbereich mit einem Reflektor, wobei der Reflektor zumindest teilweise aus fluoreszierendem Material besteht.

Die US 4 958 068 offenbart eine Reihe von Reflexionslichtschranken mit Polarisationsfiltern.

Die EP 2 502 098 A1 offenbart einen Lichtvorhang mit einem gegenüberliegenden Reflektor mit Polarisationsfiltern, um eine polarisationsabhängige Objekterfassung zu ermöglichen.

Die DE 199 24 470 A1 offenbart eine Reflexionslichtschranke mit Polarisationsfiltern.

Die EP 2 192 423 A1 offenbart ein Reflexionslichtgitter mit einem Polarisationsfilter.

Eine Aufgabe der Erfindung besteht darin, ein Reflexionslichtgitter bereitzustellen, das für die Vermessung von Gegenständen geeignet ist und eine höhere Auflösung aufweist.

Die Aufgabe wird gemäß Anspruch 1 gelöst.

Durch das erfindungsgemäße Reflexionslichtgitter gelangt das Licht eines Lichtsenders vorwiegend über einen entsprechenden Abschnitt des Reflektors zum entsprechenden Lichtempfänger der Reflexionslichtschranke. Das Licht, welches auf die benachbarten Abschnitte des Reflektors gelangt, trifft vernachlässigbar auf den Lichtempfänger der Reflexionslichtschranke.

Ein Sendestrahlbündel des Lichtsenders hat am Ort des Reflektors im Regelfall einen größeren Durchmesser als ein Abschnitt des Reflektors in Richtung zu dem benachbarten nächsten Abschnitt. Durch die polarisationsselektive Anordnung von Lichtsender, Abschnitt des Reflektors und Lichtempfänger gelangt vorwiegend das Licht aus einem Abschnitt zurück zum entsprechenden Empfänger. Der Durchmesser des Strahlenbündels reduziert sich damit auf die Ausdehnung des Abschnittes des Reflektors. D. h. es wird zwar von jedem Abschnitt Licht reflektiert, jedoch ist das Licht unterschiedlich polarisiert, so dass unterschiedlich polarisiertes Licht auf die verschiedenen Empfänger gelangt, also nur jeweils der 'richtige' Teil des Lichtes.

Da die regelmäßigen Abschnitte des Reflektors das Raster für das reflektierte Licht vorgeben, wird erfindungsgemäß auch ein ggf. vorhandener Lichtsenderschielwinkel kompensiert, da lediglich die auf den Abschnitt des Reflektors treffenden Lichtstrahlen auf den entsprechenden Empfänger gelangen.

Da das reflektierte Licht gemäß dem erfindungsgemäßen Reflexionslichtgitter nur aus einem definierten Abschnitt der Reflektors in den Empfänger gelangt, wird eine minimal zu detektierende Objektgröße kleiner und damit wird eine bessere Objektdetektion erreicht. Dadurch ist auch eine verbesserte Genauigkeit bei der Vermessung von Gegenständen erreicht.

Gemäß der Erfindung wird eine Auflösung des Reflexionslichtgitters verbessert, so dass die beste Auflösung nur durch die Größe der Abschnitte des Reflektors bestimmt wird und einer Einstellung von Schaltschwellen. Die Auflösung ist dabei unabhängig von der Strahldivergenz und dem Schielwinkel.

Gemäß einer ersten Alternative der Erfindung sind die Lichtsender direkt benachbart in einer Reihe angeordnet und die Lichtempfänger parallel zu den Lichtsendern direkt benachbart in einer Reihe angeordnet. Dabei bildet auch jeder Lichtsender und jeder benachbarte Lichtempfänger eine Reflexionslichtschranke. Dabei wird im Vergleich zu einer einreihigen Lösung eine doppelt so hohe Auflösung, also auch ein doppelt so feines Abtastraster erzielt.

Gemäß einer zweiten Alternative der Erfindung sind die Lichtsender und Lichtempfänger jeweils in zwei Reihen angeordnet, wobei sich Lichtsender und Lichtempfänger in einer Reihe abwechseln und jedem Lichtsender der einen Reihe ein Lichtempfänger der anderen Reihe zugeordnet ist. Dabei bildet auch jeder Lichtsender und jeder benachbarte Lichtempfänger eine Reflexionslichtschranke. Dabei wird im Vergleich zu einer einreihigen Lösung auch eine doppelt so hohe Auflösung, also auch ein doppelt so feines Abtastraster erzielt.

In Weiterbildung der Erfindung unterscheiden sich die erste Polarisationsrichtung des ersten Polarisationsfilters und die Polarisationsrichtung des zweiten Polarisationsfilters um 45°. Weiter unterscheiden sich die dritte Polarisationsrichtung des dritten Polarisationsfilters und die vierte Polarisationsrichtung des vierten Polarisationsfilters um 45°. Die erste Polarisationsrichtung von dem ersten Polarisationsfilter und die dritte Polarisationsrichtung von dem dritten Polarisationsfilter unterscheiden sich um 90°. Die zweite Polarisationsrichtung von dem zweiten Polarisationsfilter und die vierte Polarisationsrichtung von dem vierten Polarisationsfilter unterscheiden sich um 90°. Der Reflektor weist Tripelspiegel aus planen Spiegelflächen auf, die jeweils um 90° zueinander angeordnet sind, so dass der Reflektor je nach Orientierung die Polarisationsrichtung von reflektiertem Licht gegenüber dem einfallendem Licht um 90° dreht. Der erste Abschnitt des Reflektors ist derart gedreht, dass maximal viel Licht vom ersten Lichtsender zum ersten Empfänger gelangt und der zweite Abschnitt des Reflektors ist derart gedreht, dass maximal viel Licht vom zweiten Lichtsender zum zweiten Empfänger gelangt, wobei sich der Drehwinkel des ersten Abschnitts des Reflektors und des zweiten Abschnitts des Reflektors um 45° unterscheiden.

Durch die Anordnung von drei Planflächen oder planen Spiegelflächen im Winkel von jeweils 90° wird ein eingehender Lichtstrahl durch Totalreflexion an allen drei Flächen reflektiert und läuft parallel zu seiner Einfallsrichtung wieder zurück.

In einer alternativen Weiterbildung der Erfindung unterscheiden sich die erste Polarisationsrichtung des ersten Polarisationsfilters und die Polarisationsrichtung des zweiten Polarisationsfilters um 90°. Weiter unterscheiden sich die dritte Polarisationsrichtung des dritten Polarisationsfilters und die vierte Polarisationsrichtung des vierten Polarisationsfilters um 90°. Die erste Polarisationsrichtung von dem ersten Polarisationsfilter und die dritte Polarisationsrichtung von dem dritten Polarisationsfilter unterscheiden sich nicht und die zweite Polarisationsrichtung von dem zweiten Polarisationsfilter und die vierte Polarisationsrichtung von dem vierten Polarisationsfilter unterscheiden sich nicht. Der Reflektor weist eine linsenähnliche Struktur auf, so dass das reflektierte Licht die gleiche Polarisationsrichtung aufweist, wie das einfallende Licht, wobei vor dem ersten Abschnitt des Reflektors ein fünftes Polarisationsfilter mit einer fünften Polarisationsrichtung angeordnet ist und vor dem zweiten Abschnitt des Reflektors ein sechstes Polarisationsfilter mit einer sechsten Polarisationsrichtung angeordnet ist, wobei sich die fünfte Polarisationsrichtung des fünften Polarisationsfilters und die sechste Polarisationsrichtung des sechsten Polarisationsfilters um 90° unterscheiden.

Bei einem Reflektor mit einer linsenähnlichen Struktur wird die Polarisationsrichtung zwischen eingehendem und ausgehendem Licht nicht gedreht. Gemäß dieser Weiterbildung der Erfindung ist nun vor jedem Abschnitt des Reflektors ein Polarisationsfilter angeordnet, so dass das Licht eines zugehörigen Lichtsenders über den zugehörigen Abschnitts des Reflektors auf den zugehörigen Lichtempfänger gelangt.

In Weiterbildung der Erfindung weisen die Lichtsender und/oder die Lichtempfänger eine Optik auf. Die Optik ist dabei vorzugsweise zwischen Lichtsender bzw. Lichtempfänger und Polarisationsfilter angeordnet. Durch die Optik wird die Strahldivergenz bestimmt. Die Optik wird im einfachsten Fall durch eine Blende gebildet. Jedoch kann die Optik auch durch eine Linse oder auch ein Linsensystem gebildet sein.

Die Strahldivergenz wird beispielsweise in einem Winkel von 0°, also parallelen Lichtstrahlen bis ca. +/-5° eingestellt. Je kleiner die Strahldivergenz ist, desto größer kann der Abstand zwischen den Lichtsendern bzw. Lichtempfängern und dem Reflektor gewählt werden.

Mit Hilfe der Optik wird auch ein möglicher Schielwinkel des Lichtsenders kompensiert und im idealen Fall ganz vermieden, so dass der Schielwinkel 0° beträgt. Ein Schielwinkel bezeichnet dabei die Abweichung der Lichtachse der Lichtsender von der Sollrichtung. Im idealen Fall sind alle Lichtachsen der Lichtsender parallel ausgerichtet.

In einer bevorzugten Ausführungsform sind die Polarisationsfilter lineare Polarisationsfilter. Lineare Polarisationsfilter sind einfach herstellbar und daher preiswert. Die linearen Polarisationsfilter brauchen lediglich für die gewünschte Wirkung in einer bestimmten Orientierung, also in einer bestimmten Polarisationsrichtung angeordnet werden. Durch die Verwendung von zwei unterschiedlichen linearen Polarisationsrichtungen können erfindungsgemäß zwei benachbarte Reflexionslichtschranken optisch getrennt werden, ohne dass eine gegenseitige Beeinflussung stattfindet.

In Weiterbildung sind die Polarisationsfilter zirkuläre Polarisationsfilter. Zirkulare Polarisationsfilter werden durch ein lineares Polarisationsfilter und eine λ/4 Folie gebildet.
In Weiterbildung der Erfindung trifft das Sendelicht eines Lichtsenders nur maximal drei gegenüberliegende Abschnitte des Reflektors. Dies wird durch eine geeignete Wahl der Strahldivergenz der Lichtsender und durch den Abstand zwischen den Lichtsendern bzw. Lichtempfängern und dem Reflektor sowie der Abstände der Lichtsender zueinander erreicht. Der Schielwinkel und die Strahldivergenz definieren gemeinsam den maximalen Abstand des Reflektors. Je kleiner die Strahldivergenz der Lichtsender ist und je weiter die Abstände zwischen den Lichtsendern sind, desto größer kann der Abstand zwischen Lichtsender bzw. Lichtempfänger und Reflektor betragen. Je höher jedoch die Messauflösung des Reflexionslichtgitters gewünscht wird, desto geringer müssen die Abstände zwischen den Lichtsendern bzw. zwischen den Lichtempfängern sein.

In Weiterbildung der Erfindung weist das Licht unterschiedlicher Lichtsender unterschiedliche Wellenlängen auf und die zugehörigen Lichtempfänger sind nur für diese Wellenlänge empfindlich. Dadurch ist es möglich, eine noch größere Anzahl von Reflexionslichtschranken optisch zu entkoppeln. Beispielsweise können zwei Lichtsender mit identischer Polarisationsrichtung durch Licht unterschiedlicher Wellenlänge optisch voneinander entkoppelt werden. In Weiterbildung der Erfindung sind vor den Lichtsendern, den Lichtempfängern und dem Reflektor jeweils Farbfilter oder Bandpassfilter angeordnet.
Die Lichtsender können von einer Leuchtdiode (LED), einem 'Vertical-Cavity Surface Emitting Laser' (VCSEL), einer Laserdiode oder ähnlichem gebildet sein oder aus einer Kombination dieser Lichtquellen.
In Weiterbildung der Erfindung triff das Sendelicht eines Lichtsenders nur maximal fünf gegenüberliegende Abschnitte des Reflektors. Dies wird durch eine geeignete Wahl der Strahldivergenz der Lichtsender und durch den Abstand zwischen den Lichtsendern bzw. Lichtempfängern und dem Reflektor sowie der Abstände der Lichtsender zueinander erreicht. Dabei werden mindestens vier benachbarte Lichtsender optisch voneinander entkoppelt.

Weiter kann beispielsweise das Reflexionslichtgitter eine Ausrichthilfe aufweisen, welche durch einen Orientierungsstrahl gebildet ist, beispielsweise einen Laserstrahl. Die Ausrichthilfe dient dazu, das Gehäuse auf den Reflektor und/oder den Reflektor auf das Gehäuse auszurichten.

Zum Betrieb wird beispielsweise das Reflexionslichtgitter relativ zum Reflektor ausgerichtet oder der Reflektor relativ zum Reflexionslichtgitter. Hierfür wird beispielsweise der Reflektor lagefest fixiert. Das Reflexionslichtgitter befindet sich in einer Aufnahme, in dem es rotiert und verschoben werden kann. Im ersten Schritt wird das Reflexionslichtgitter rotiert, bis sich das Senderlichtspotarray vollständig auf dem Reflektor befindet. Im zweiten Schritt wird das Reflexionslichtgitter in Längsrichtung verschoben und währenddessen ein Ausrichtsignal erzeugt. Dieses Ausrichtsignal kann beispielsweise ein Empfangssignal oder die Summe aller Empfangssignale sein. Bei optimaler Ausrichtung ist dieses Ausrichtsignal vorzugsweise maximal.
Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein Reflexionslichtgitter gemäß der Erfindung;
- Figur 2: eine Tabelle mit Polarisationsrichtungen für einzelne Reflexionslichtschranken des Reflexionslichtgitters;
- Figur 3: einen Lichtsender mit Sendedivergenz und ein Abschnitt des Reflektors;
- Figur 4: ein Reflexionslichtgitter mit mehreren Lichtsendern und Lichtempfängern in einer Reihe;
- Figur 5 und 6: ein Reflexionslichtgitter mit Lichtsendern und Lichtempfängern in zwei Reihen;
- Figur 7: ein Reflexionslichtgitter mit Lichtsendern und Lichtempfängern in einer ersten Reihe und Lichtsender und Lichtempfänger in einer zweiten Reihe;
- Figur 8: ein Reflexionslichtgitter mit einer autokollimativen Reflexionslichtschrankenanordnung;
- Figur 10: ein Reflexionslichtgitter gemäß der Erfindung mit jeweils gedrehten Abschnitten des Reflektors;
- Figur 11: eine Tabelle mit Ausrichtwinkeln für die Abschnitte des Reflektors;
- Figur 12: einen Lichtsender mit Sendedivergenz und ein Abschnitt des Reflektors;
- Figur 13: ein Reflexionslichtgitter mit mehreren Lichtsendern und Lichtempfängern in einer Reihe und einem Reflektor mit Abschnitten in einer Reihe;
- Figur 14 und 15: ein Reflexionslichtgitter mit Lichtsendern in einer Reihe und Lichtempfängern in einer Reihe und ein Reflektor mit zwei unterschiedlichen Abschnitten;
- Figur 16: ein Reflexionslichtgitter mit Lichtsendern und Lichtempfängern in einer ersten Reihe und Lichtsendern und Lichtempfängern in einer zweiten Reihe und alternierenden Abschnitte von Reflektoren;
- Figur 17: ein Reflexionslichtgitter mit einer autokollimativen Reflexionslichtschrankenanordnung und alternierenden Abschnitten von Reflektoren;
- Figur 18: eine Darstellung des Signals von Reflektorabschnitten abhängig vom Drehwinkel des Reflektors;
- Figur 19: eine Reflexionslichtgitter gemäß der Erfindung mit jeweils gedrehten Abschnitten des Reflektors, mit Lichtsendern unterschiedlicher Wellenlänge und Polarisationsfiltern vor Abschnitten des Reflektors;
- Figur 20: ein Reflexionslichtgitter mit einer autokollimativen Reflexionslichtschrankenanordnung mit jeweils gedrehten Abschnitten des Reflektors, mit Lichtsendern unterschiedlicher Wellenlänge und Polarisationsfiltern vor Abschnitten des Reflektors.

In den nachfolgenden Figuren sind identische Teile mit identischen Bezugszeichen versehen.

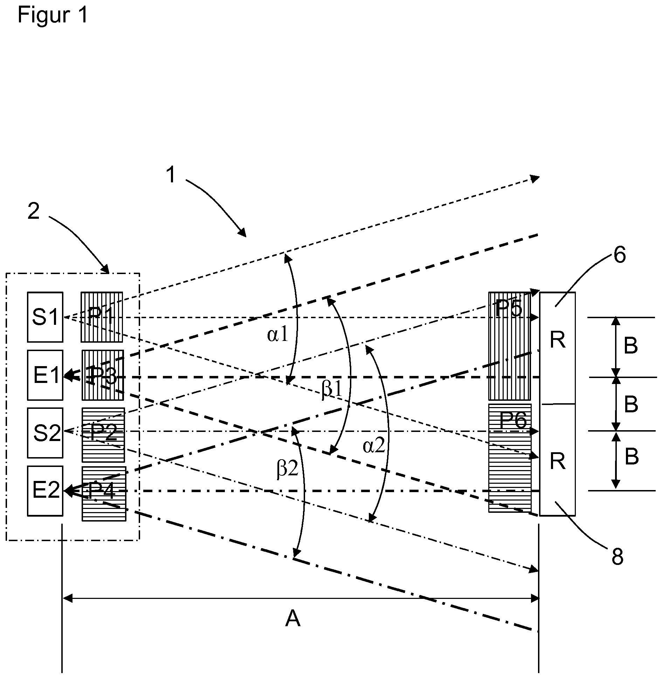

Figur 1 zeigt ein Reflexionslichtgitter mit mehreren Lichtsendern S1, S2 und mehreren Lichtempfängern E1, E2 in einem Gehäuse 2 und einem gegenüberliegenden retroreflektierenden Reflektor R, der eingehende Lichtstrahlen 4 parallel zu Ihrer Einfallsrichtung zurückreflektiert, wobei der retroreflektierende Reflektor R mindestens einen ersten Abschnitt 6 aufweist und mindestens einen zweiten Abschnitt 8 aufweist, wobei ein erster Lichtsender S1, ein erster Lichtempfänger E1 und der erste Abschnitt 6 des Reflektors eine erste Reflexionslichtschranke bilden und ein zweiter Lichtsender S2, ein zweiter Lichtempfänger E2 und der zweite Abschnitt 8 des Reflektors R eine zweite Reflexionslichtschranke bilden, wobei der erste Abschnitt 6 und der zweite Abschnitt 8 unterschiedliche Polarisationseigenschaften aufweisen, vor dem ersten Lichtsender S1 ein erstes Polarisationsfilter P1 mit einer ersten Polarisationsrichtung und vor dem zweiten Lichtsender ein zweites Polarisationsfilter P2 mit einer zweiten Polarisationsrichtung angeordnet ist, vor dem ersten Lichtempfänger E1 ein drittes Polarisationsfilter P3 mit einer dritten Polarisationsrichtung und vor dem zweiten Lichtempfänger E2 ein viertes Polarisationsfilter P4 mit einer vierten Polarisationsrichtung angeordnet ist, wobei sich die erste Polarisationsrichtung des ersten Polarisationsfilters P1 und die Polarisationsrichtung des zweiten Polarisationsfilters P2 unterscheiden und wobei sich die dritte Polarisationsrichtung des dritten Polarisationsfilters P3 und die vierte Polarisationsrichtung des vierten Polarisationsfilters P4 unterscheiden.

Gemäß Figur 1 unterscheiden sich die erste Polarisationsrichtung des ersten Polarisationsfilters P1 und die Polarisationsrichtung des zweiten Polarisationsfilters P2 um 90°. Weiter unterscheiden sich die dritte Polarisationsrichtung des dritten Polarisationsfilters P3 und die vierte Polarisationsrichtung des vierten Polarisationsfilters P4 um 90°. Die erste Polarisationsrichtung von dem ersten Polarisationsfilter P1 und die dritte Polarisationsrichtung von dem dritten Polarisationsfilter P3 unterscheiden sich nicht und die zweite Polarisationsrichtung von dem zweiten Polarisationsfilter P2 und die vierte Polarisationsrichtung von dem vierten Polarisationsfilter P4 unterscheiden sich nicht. Der Reflektor R weist eine linsenähnliche Struktur auf, so dass das reflektierte Licht die gleiche Polarisationsrichtung aufweist, wie das einfallende Licht, wobei vor dem ersten Abschnitt 6 des Reflektors R ein fünftes Polarisationsfilter P5 mit einer fünften Polarisationsrichtung angeordnet ist und vor dem zweiten Abschnitt 8 des Reflektors R ein sechstes Polarisationsfilter P6 mit einer sechsten Polarisationsrichtung angeordnet ist, wobei sich die fünfte Polarisationsrichtung des fünften Polarisationsfilters P5 und die sechste Polarisationsrichtung des sechsten Polarisationsfilters P6 um 90° unterscheiden. Die Polarisationsrichtung des ersten, dritten und fünften Polarisationsfilters ist dabei identisch. Weiter ist die Polarisationsrichtung des zweiten, vierten und sechsten Polarisationsfilters identisch.

Bei den Polarisationsfiltern P1, P2, P3, P4, P5, P6 kann es sich um lineare Polarisationsfilter handeln. Die linearen Polarisationsfilter brauchen lediglich für die gewünschte Wirkung in einer bestimmten Orientierung, also in einer bestimmten Polarisationsrichtung angeordnet werden. Durch die Verwendung von zwei unterschiedlichen linearen Polarisationsrichtungen werden erfindungsgemäß zwei benachbarte Reflexionslichtschranken optisch getrennt, ohne dass eine gegenseitige Beeinflussung stattfindet.

Die Polarisationsfilter P1, P2, P3, P4, P5, P6 können gemäß Figur 1 auch zirkuläre Polarisationsfilter sein. Zirkulare Polarisationsfilter werden durch ein lineares Polarisationsfilter und eine λ/4 Folie gebildet.

Die Lichtsender und/oder die Lichtempfänger weisen optional eine Optik auf. Die Optik ist dabei vorzugsweise zwischen Lichtsender S1, S2 bzw. Lichtempfänger E1, E2 und Polarisationsfilter P1, P2, P3, P4 angeordnet. Durch die Optik wird die Strahldivergenz bestimmt. Die Optik wird im einfachsten Fall durch eine Blende gebildet. Jedoch kann die Optik auch durch eine Linse oder auch ein Linsensystem gebildet sein.

Die Strahldivergenz mit den Winkeln α1, α2, β1, β2, die Abstände B zwischen den Lichtsendern und Lichtempfängern und der Abstand A zwischen dem Lichtsender bzw. Lichtempfänger und dem Reflektor sind in Figur 1 lediglich schematisch dargestellt.

Die Strahldivergenz wird beispielsweise in einem Winkel α1, α2, β1, β2 von ca. 0° bis ca. +/-5° eingestellt. Je kleiner die Strahldivergenz ist, desto größer kann der Abstand zwischen den Lichtsendern bzw. Lichtempfängern und dem Reflektor gewählt werden. Dabei weist der Lichtsender S1 die Strahldivergenz mit einem Winkel α1 auf. Der zugehörige Lichtempfänger E1 weist die Empfangsdivergenz mit einem Winkel von β1 auf. Der Lichtsender S2 weist die Strahldivergenz mit dem Winkel α2 auf. Der zugehörige Lichtempfänger E2 weist die Empfangsdivergenz mit einem Winkel β2 auf.

Die Abstände B zwischen den Lichtsendern S1, S2 und Lichtempfängern E1, E2 betragen ca. wenige Millimeter bis wenige Zentimeter. Die Abstände A zwischen Lichtsendern S1, S2 bzw. Lichtempfängern E1, E2 und dem Reflektor R können wenige Zentimeter und bis zu mehreren Metern betragen.

Mit Hilfe der Optik wird auch ein möglicher Schielwinkel des Lichtsenders S1, S2 kompensiert und im idealen Fall ganz vermieden, so dass der Schielwinkel 0° beträgt. Ein Schielwinkel bezeichnet dabei die Abweichung der Lichtachse der Lichtsender S1, S2 von der Sollrichtung. Im idealen Fall sind alle Lichtachsen der Lichtsender S1, S2 parallel ausgerichtet, wie in Figur 1 dargestellt.

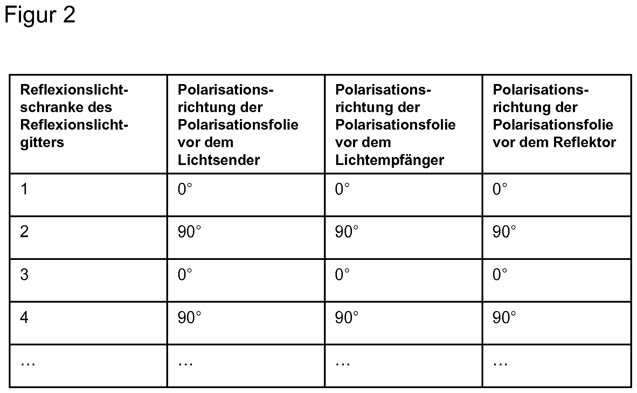

Figur 2 zeigt tabellarisch für die einzelnen gebildeten Reflexionslichtschranken des Lichtgitters gemäß Figur 1 beispielhaft die Orientierung der Polarisationsfilter für Lichtsender, Reflektor und Lichtempfänger an.

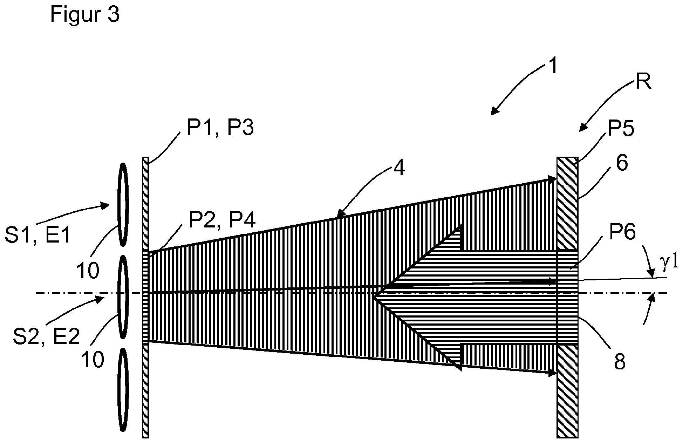

Figur 3 zeigt einen Lichtsender S2 mit Strahldivergenz und einem nahezu parallelen Strahlbündel, das vom zweiten Abschnitt 8 des Reflektor R zurückgeworfen wird. Ein Sendestrahlbündel des Lichtsenders S2 hat am Ort des Reflektors R im Regelfall einen größeren Durchmesser als ein Abschnitt 8 des Reflektors R in Richtung zu dem benachbarten nächsten Abschnitt 6, wie in Figur 3 dargestellt. Dabei weisen die Lichtstrahlen des Lichtsenders S2 auch einen Schielwinkel γ1 auf. Durch die polarisationsselektive Anordnung von Lichtsender S2, Abschnitt 8 des Reflektors mit sechstem Polarisationsfilter P6 und Lichtempfänger E2 gelangt vorwiegend das Licht aus dem Abschnitt 8 zurück zum entsprechenden Empfänger E2. Der Durchmesser des Strahlenbündels reduziert sich damit auf die Ausdehnung des Abschnittes 8 des Reflektors. Da der Reflektor alternierend erste Abschnitte 6 und zweite Abschnitte 8 aufweist, gelangt Licht nur aus dem entsprechenden Abschnitt auf den Empfänger. Dabei wird das Licht in sich zurückreflektiert und vom Empfänger empfangen.

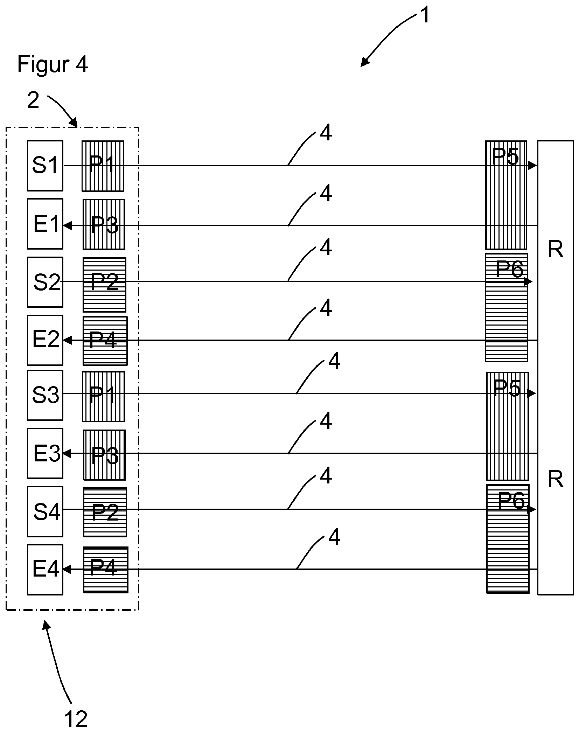

Figur 4 zeigt ein Reflexionslichtgitter 1 mit abwechselnd angeordneten Lichtsendern S1, S2, S3, S4 und Lichtempfängern E1, E2, E3, E4 in einer Reihe 12 zur Bildung einer Mehrzahl von Reflexionslichtschranken.

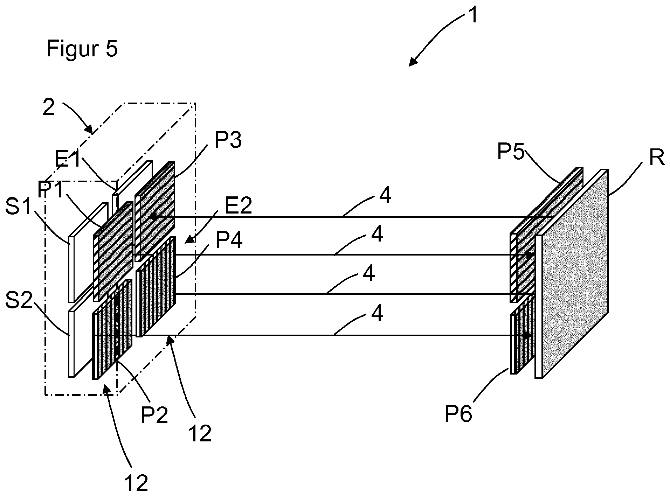

Figur 5 zeigt eine zweireihige Anordnung von Lichtsendern S1, S2 in einer ersten Reihe 12 und Lichtempfängern E1, E2 in einer zweiten Reihe 12.

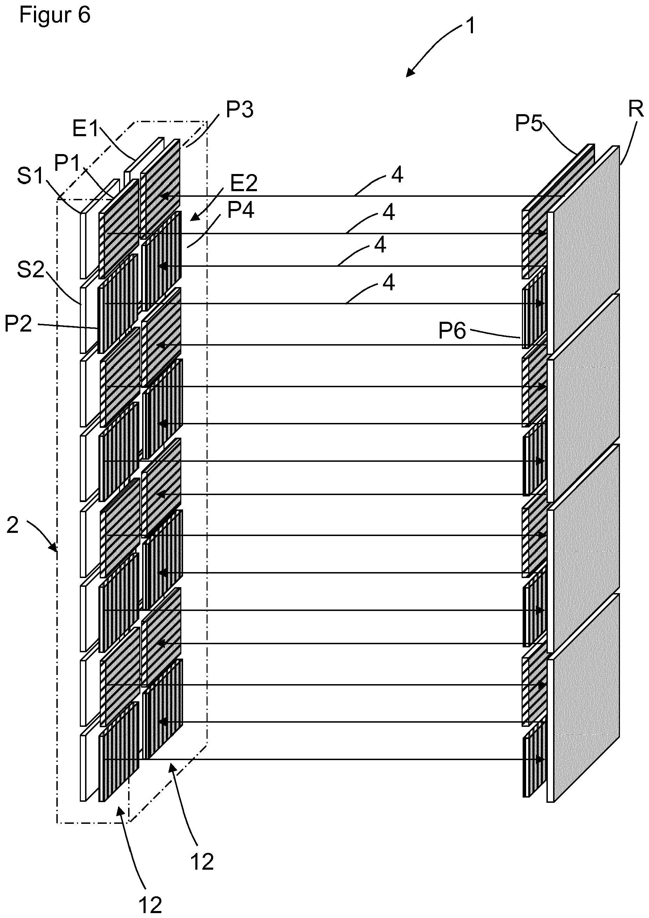

Figur 6 zeigt die Anordnung aus Figur 5 mit einer Vielzahl von gebildeten Reflexionslichtschranken zur Bildung eines Reflexionslichtgitters 1 mit Lichtsendern S1, S2 in einer ersten Reihe 12 und Lichtempfängern E1, E2 in einer zweiten Reihe 12.

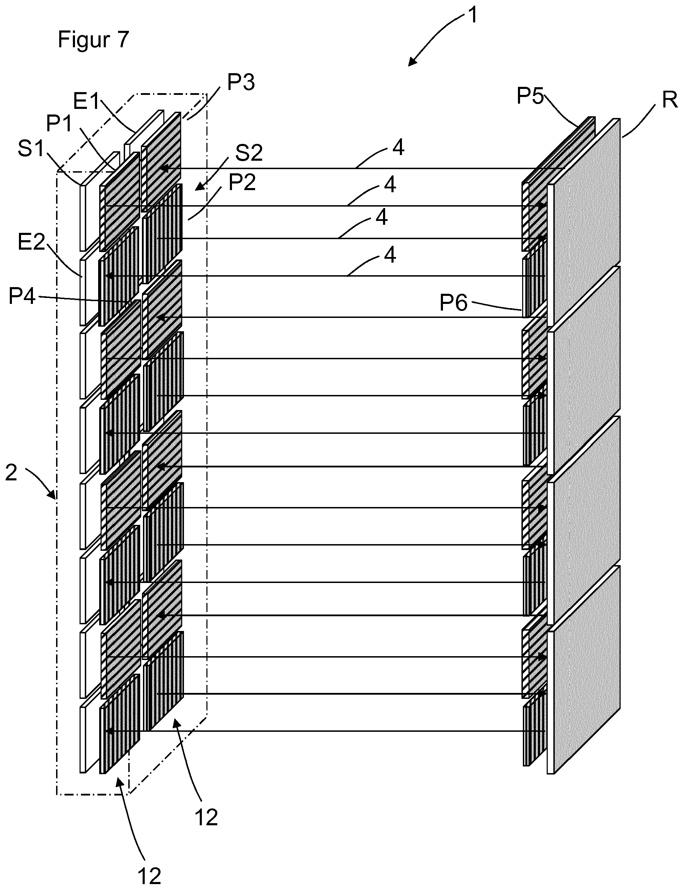

Figur 7 zeigt eine zweireihige Anordnung von Lichtsendern S1 und Lichtempfängern E2 in einer ersten Reihe 12 und Lichtsendern S2 und Lichtempfängern E1 in einer zweiten Reihe 12. Jeweils ein Lichtsender S1, S2 einer Reihe 12 und ein Lichtempfänger E1, E2 der anderen Reihe bilden eine Reflexionslichtschranke.

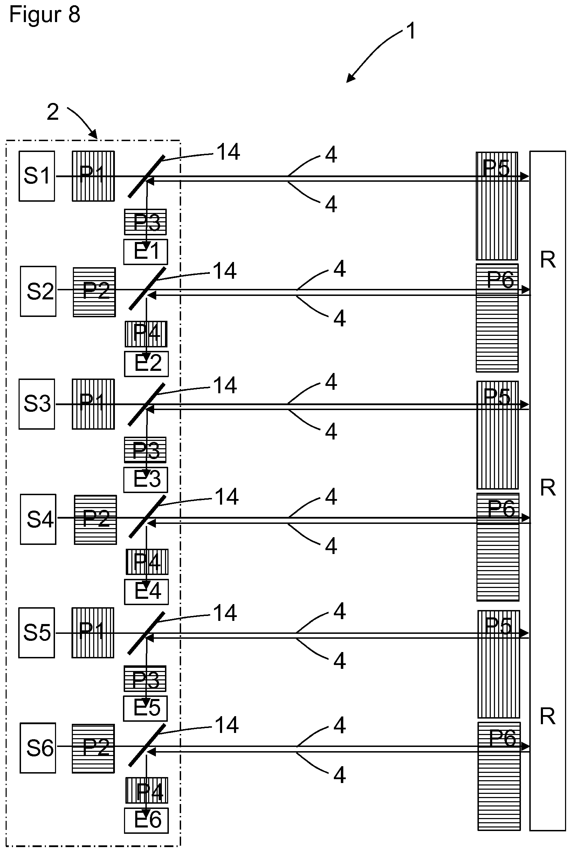

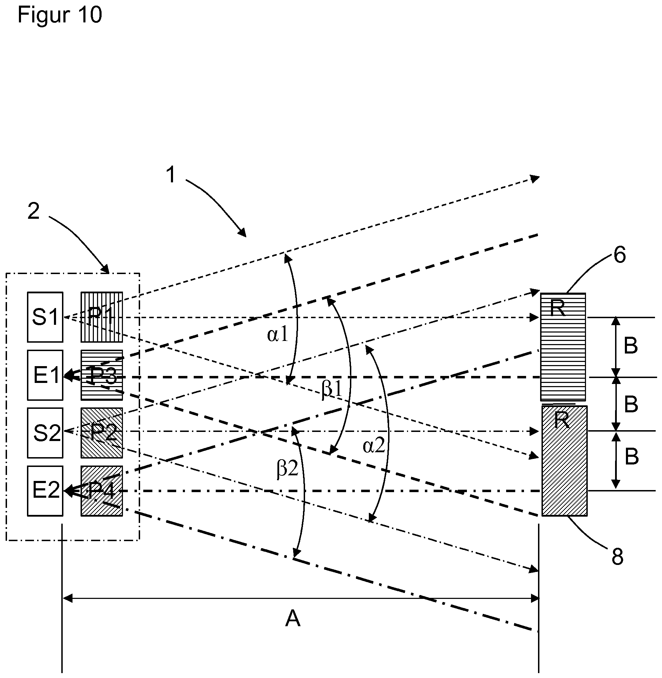

Figur 8 zeigt ein Reflexionslichtgitter, gebildet aus Reflexionslichtschranken, wobei Lichtsender S1, S2, S3, S4, S5, S6 und Lichtempfänger E1, E2, E3, E4, E5, E6 eine Autokollimationsanordnung bilden. Dabei sind die Lichtstrahlen des Lichtsenders S1, S2, S3, S4, S5, S6 und die zurückgeworfenen Lichtstrahlen kollimiert, d.h. diese verlaufen innerhalb derselben Lichtstrecke. Die Lichtstrahlen 4 werden dabei von einem Lichtsender S1 ausgesendet und durchqueren das erste Polarisationsfilter P1. Danach durchqueren die Lichtstrahlen 4 einen halbtransparenten Spiegel 14. Nach Durchqueren des Überwachungsbereichs durchdringen die Lichtstrahlen 4 das fünfte Polarisationsfilter P5, um anschließend von dem Retroreflektor R um 180° umgelenkt zu werden. Danach durchqueren die Lichtstrahlen 4 erneut das fünfte Polarisationsfilter P5 und Treffen nach Durchqueren den Überwachungsbereichs auf den halbdurchlässigen Spiegel 14. Die Lichtstrahlen 4 werden von dem halbdurchlässigen Spiegel 14 um 90° abgelenkt und durchdringen ein drittes Polarisationsfilter P3. Danach treffen die Lichtstrahlen 4 auf den ersten Lichtempfänger E1.

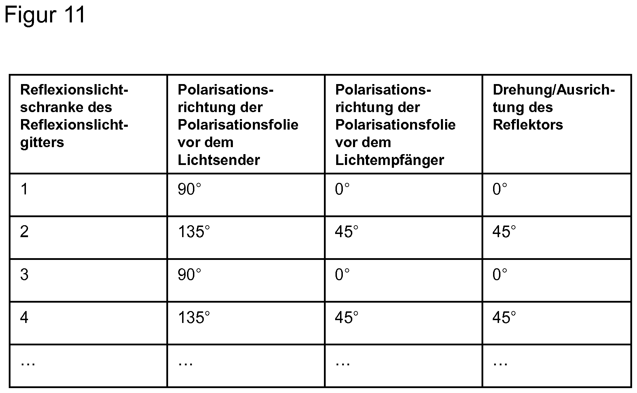

Figur 10 zeigt ein Reflexionslichtgitter mit mehreren Lichtsendern S1, S2 und mehreren Lichtempfängern E1, E2 in einem Gehäuse 2 und einem gegenüberliegenden retroreflektierenden Reflektor R, der eingehende Lichtstrahlen 4 parallel zu Ihrer Einfallsrichtung zurückreflektiert, wobei der retroreflektierende Reflektor R mindestens einen ersten Abschnitt 6 aufweist und mindestens einen zweiten Abschnitt 8 aufweist, wobei ein erster Lichtsender S1, ein erster Lichtempfänger E und der erste Abschnitt 6 des Reflektors eine erste Reflexionslichtschranke bilden und ein zweiter Lichtsender S2, ein zweiter Lichtempfänger E2 und der zweite Abschnitt 8 des Reflektors R eine zweite Reflexionslichtschranke bilden, wobei der erste Abschnitt 6 und der zweite Abschnitt 8 unterschiedliche Polarisationseigenschaften aufweisen, vor dem ersten Lichtsender S1 ein erstes Polarisationsfilter P1 mit einer ersten Polarisationsrichtung und vor dem zweiten Lichtsender ein zweites Polarisationsfilter P2 mit einer zweiten Polarisationsrichtung angeordnet ist, vor dem ersten Lichtempfänger E1 ein drittes Polarisationsfilter P3 mit einer dritten Polarisationsrichtung und vor dem zweiten Lichtempfänger E2 ein viertes Polarisationsfilter P4 mit einer vierten Polarisationsrichtung angeordnet ist, wobei sich die erste Polarisationsrichtung des ersten Polarisationsfilters P1 und die Polarisationsrichtung des zweiten Polarisationsfilters P2 unterscheiden und wobei sich die dritte Polarisationsrichtung des dritten Polarisationsfilters P3 und die vierte Polarisationsrichtung des vierten Polarisationsfilters P4 unterscheiden.

Gemäß Figur 10 unterscheiden sich die erste Polarisationsrichtung des ersten Polarisationsfilters P1 und die Polarisationsrichtung des zweiten Polarisationsfilters P2 um 45°. Weiter unterscheiden sich die dritte Polarisationsrichtung des dritten Polarisationsfilters P3 und die vierte Polarisationsrichtung des vierten Polarisationsfilters P4 um 45°. Die erste Polarisationsrichtung von dem ersten Polarisationsfilter P1 und die dritte Polarisationsrichtung von dem dritten Polarisationsfilter P3 unterscheiden sich um 90°. Die zweite Polarisationsrichtung von dem zweiten Polarisationsfilter P2 und die vierte Polarisationsrichtung von dem vierten Polarisationsfilter P4 unterscheiden sich um 90°. Der Reflektor R weist Tripelspiegel aus planen Spiegelflächen auf, die jeweils um 90° zueinander angeordnet sind, so dass der Reflektor R je nach Orientierung die Polarisationsrichtung von reflektiertem Licht gegenüber dem einfallendem Licht um 90° dreht. Der erste Abschnitt 6 des Reflektors R ist derart gedreht, dass maximal viel Licht vom ersten Lichtsender zum ersten Empfänger gelangt und der zweite Abschnitt 8 des Reflektors R ist derart gedreht, dass maximal viel Licht vom zweiten Lichtsender zum zweiten Empfänger gelangt, wobei sich der Drehwinkel des ersten Abschnitts des Reflektors und des zweiten Abschnitts des Reflektors um 45° unterscheiden.

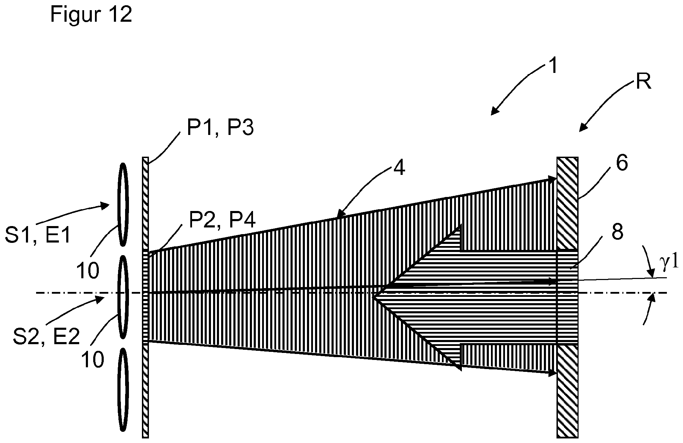

Figur 11 zeigt tabellarisch für die einzelnen gebildeten Reflexionslichtschranken des Lichtgitters gemäß Figur 10 beispielhaft die Orientierung der Polarisationsfilter für Lichtsender und Lichtempfänger und die Orientierung der Abschnitte des Reflektors an.

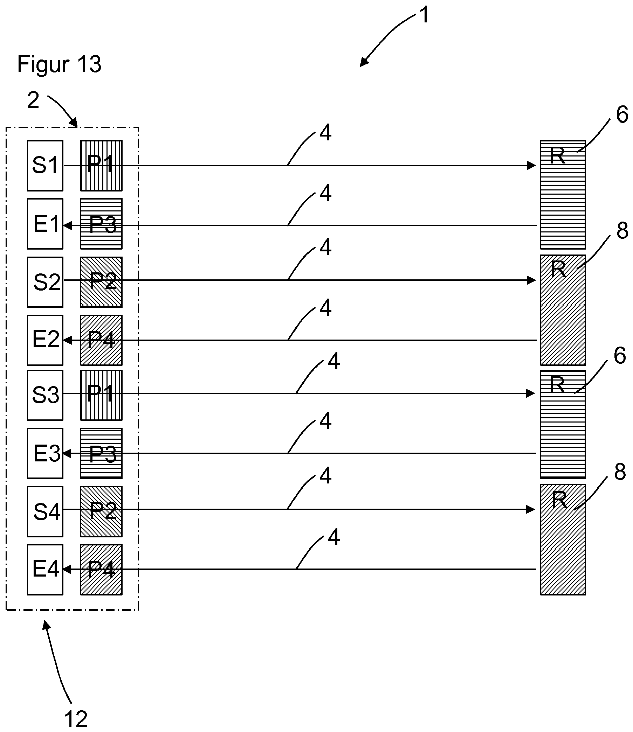

Figur 12 zeigt einen Lichtsender S2 mit Strahldivergenz und einem nahezu parallelen Strahlbündel, das über den zweiten Abschnitt 8 des Reflektor R zum entsprechenden Empfänger gelangt. Ein Sendestrahlbündel des Lichtsenders S2 hat am Ort des Reflektors R im Regelfall einen größeren Durchmesser als ein Abschnitt 8 des Reflektors R in Richtung zu dem benachbarten nächsten Abschnitt 6, wie in Figur 3 dargestellt. Dabei weisen die Lichtstrahlen des Lichtsenders S2 auch einen Schielwinkel γ1 auf. Durch die polarisationsselektive Anordnung von Lichtsender S2, Abschnitt 8 des Reflektors und Lichtempfänger E2 gelangt vorwiegend das Licht aus dem Abschnitt 8 zurück zum entsprechenden Empfänger E2. Der Durchmesser des Strahlenbündels reduziert sich damit auf die Ausdehnung des Abschnittes 8 des Reflektors. Da der Reflektor alternierend erste Abschnitte 6 und zweite Abschnitte 8 aufweist, gelangt Licht nur aus dem entsprechenden Abschnitt auf den Empfänger. Dabei wird das Licht in sich zurückreflektiert und vom Empfänger empfangen.

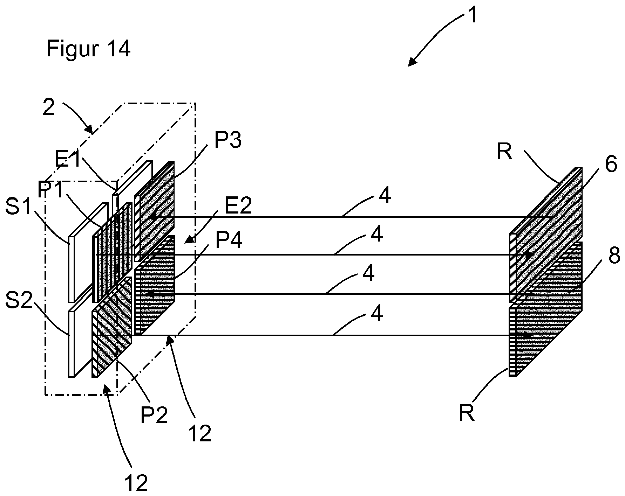

Figur 13 zeigt ein Reflexionslichtgitter 1 mit abwechselnd angeordneten Lichtsendern S1, S2, S3, S4 und Lichtempfängern E1, E2, E3, E4 in einer Reihe 12 und gegenüberliegenden Abschnitten 6 und 8 des Reflektors R zur Bildung einer Mehrzahl von Reflexionslichtschranken.

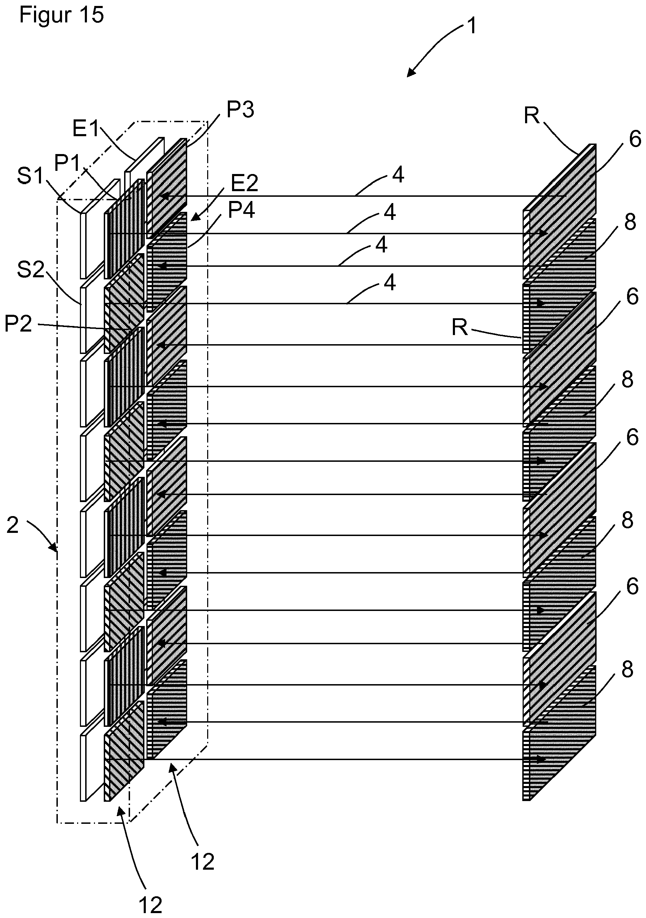

Figur 14 zeigt eine zweireihige Anordnung von Lichtsendern S1, S2 in einer ersten Reihe 12 und Lichtempfängern E1, E2 in einer zweiten Reihe 12 und gegenüberliegenden Reflektorabschnitten 6 und 8.

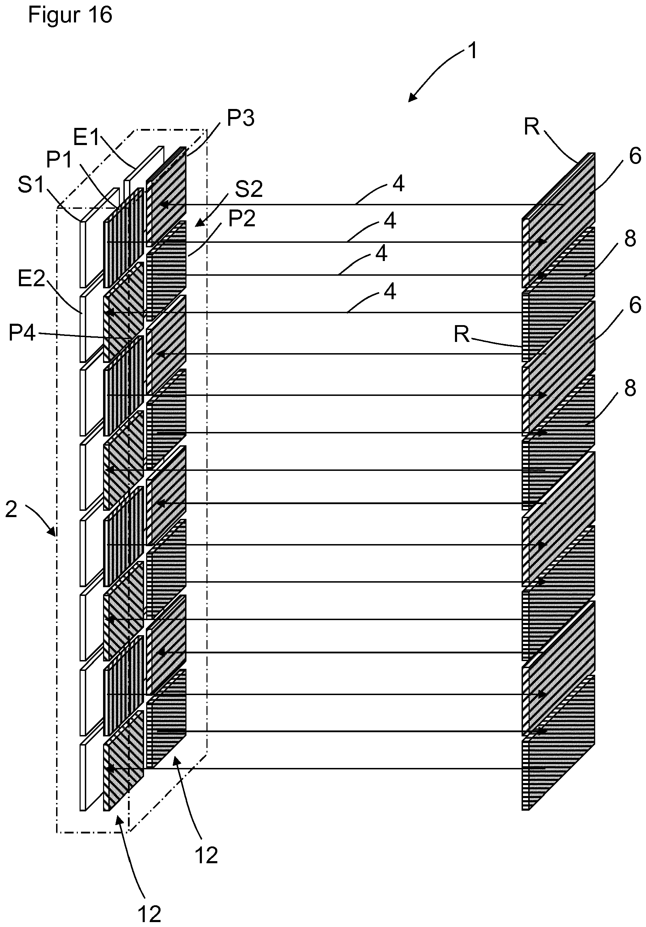

Figur 15 zeigt die Anordnung aus Figur 14 mit einer Vielzahl von gebildeten Reflexionslichtschranken zur Bildung eines Reflexionslichtgitters 1 mit Lichtsendern S1, S2 in einer ersten Reihe 12 und Lichtempfängern E1, E2 in einer zweiten Reihe 12 und gegenüberliegenden alternierend angeordneten Reflektorabschnitten 6 und 8.

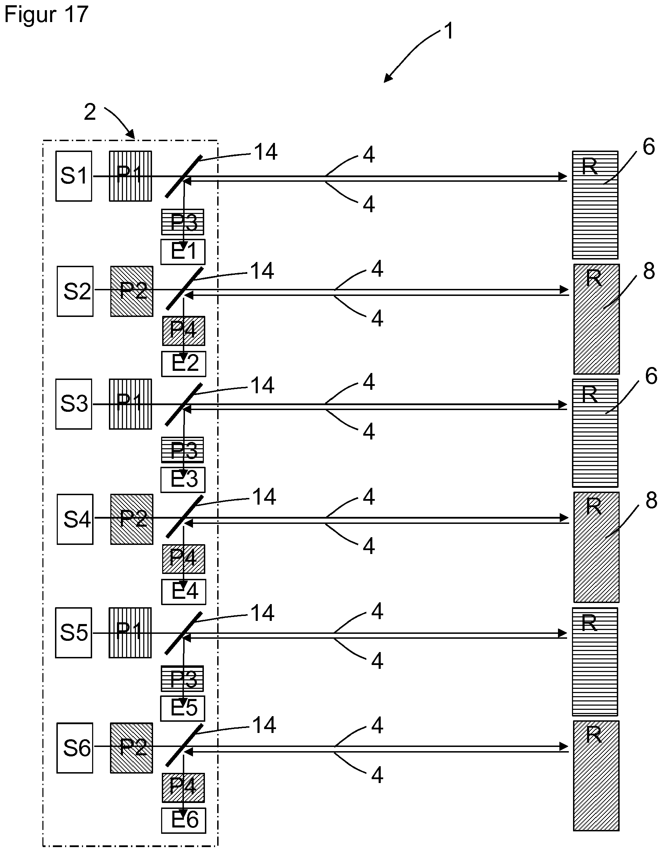

Figur 16 zeigt eine zweireihige Anordnung von Lichtsendern S1 und Lichtempfängern E2 in einer ersten Reihe 12 und Lichtsendern S2 und Lichtempfängern E1 in einer zweiten Reihe 12. Jeweils ein Lichtsender S1, S2 einer Reihe 12 und ein Lichtempfänger E1, E2 der anderen Reihe bilden eine Reflexionslichtschranke.

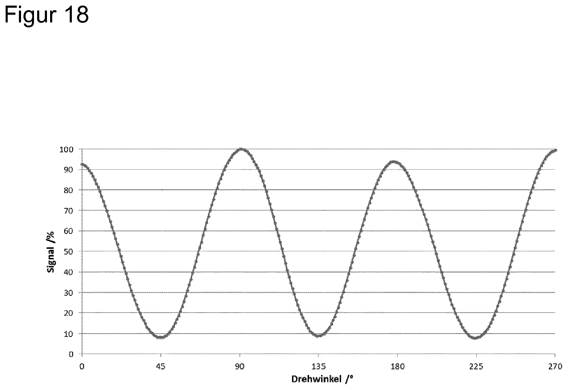

Figur 17 zeigt ein Reflexionslichtgitter, gebildet aus Reflexionslichtschranken, wobei Lichtsender S1, S2, S3, S4, S5, S6 und Lichtempfänger E1, E2, E3, E4, E5, E6 eine Autokollimationsanordnung bilden. Dabei sind die Lichtstrahlen des Lichtsenders S1, S2, S3, S4, S5, S6 und die zurückgeworfenen Lichtstrahlen kollimiert, d.h. diese verlaufen innerhalb derselben Lichtstrecke. Die Lichtstrahlen 4 werden dabei von einem Lichtsender S1 ausgesendet und durchqueren das erste Polarisationsfilter P1. Danach durchqueren die Lichtstrahlen 4 einen halbtransparenten Spiegel 14. Nach Durchqueren des Überwachungsbereichs werden die Lichtstrahlen von dem Retroreflektor R um 180° umgelenkt. Dabei sind die Abschnitte 6 und 8 des Reflektors gemäß der Tabelle gemäß Figur 11 angeordnet. Nach Durchqueren des Überwachungsbereichs treffen die Lichtstrahlen auf den halbdurchlässigen Spiegel 14. Die Lichtstrahlen 4 werden von dem halbdurchlässigen Spiegel 14 um 90° abgelenkt und durchdringen ein drittes Polarisationsfilter P3. Danach treffen die Lichtstrahlen 4 auf den ersten Lichtempfänger E1.

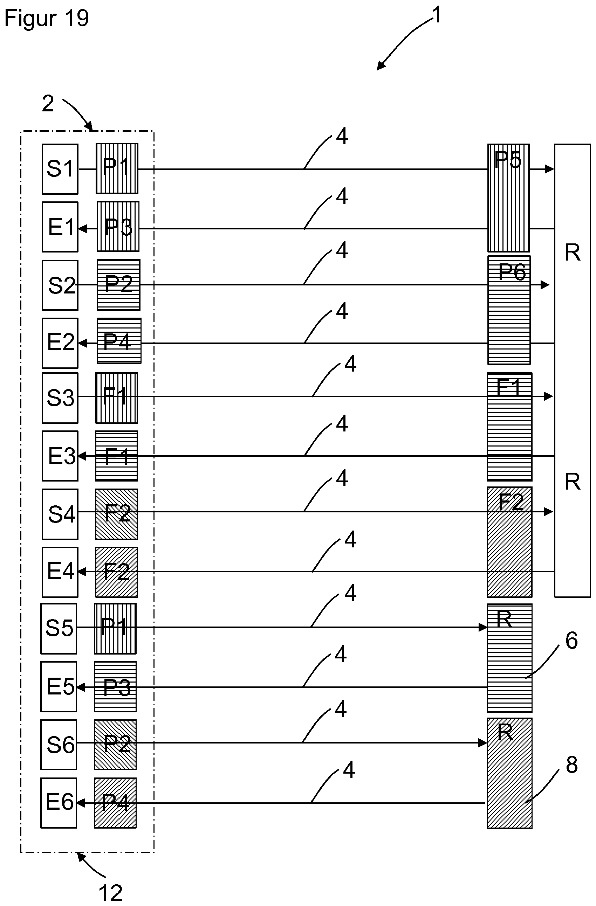

Figur 18 zeigt exemplarisch das Signal von polarisiertem Licht bei Reflexion an dem Abschnitt des Reflektors bei verschiedenen Drehwinkeln des Abschnitts des Reflektors. Bei den Drehwinkeln 0°, 90°, 180° und 270° ist dabei das höchste Signal von über 90 % erreicht. Bei den Drehwinkeln 45°, 135°, 225° und 315° ist dabei das geringste Signal von weniger als 10 % erreicht.

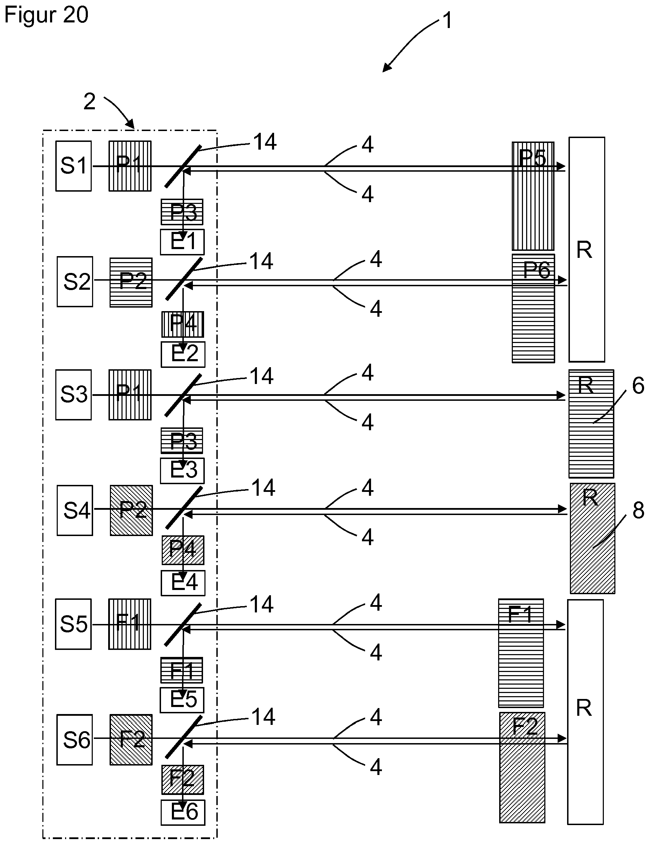

Figur 19 zeigt eine Kombination der Vorrichtung gemäß Figur 4 und Figur 13. Das Licht der Lichtsender S1 und S2 wird dabei durch die die Polarisationsfilter P5 und P6 vor dem Reflektor R gefiltert. Das Licht der Lichtsender S3 und S4 weist durch die Farbfilter oder Bandpassfilter F1 und F2 Licht unterschiedlicher Wellenlänge auf. Das Licht der Lichtsender S5 und S5 wird schließlich durch unterschiedlich orientierte Abschnitte 6 und 8 der Reflektoren gefiltert.

Figur 20 zeigt ein Reflexionslichtgitter, gebildet aus Reflexionslichtschranken, wobei Lichtsender S1, S2, S3, S4, S5, S6 und Lichtempfänger E1, E2, E3, E4, E5, E6 eine Autokollimationsanordnung bilden. Dabei sind die Lichtstrahlen des Lichtsenders S1, S2, S3, S4, S5, S6 und die zurückgeworfenen Lichtstrahlen kollimiert, d.h. diese verlaufen innerhalb derselben Lichtstrecke. Die Lichtstrahlen 4 werden dabei von einem Lichtsender S1 ausgesendet und durchqueren das erste Polarisationsfilter P1. Danach durchqueren die Lichtstrahlen 4 einen halbtransparenten Spiegel 14. Nach Durchqueren des Überwachungsbereichs durchdringen die Lichtstrahlen 4 das fünfte Polarisationsfilter P5, um anschließend von dem Retroreflektor R um 180° umgelenkt zu werden. Danach durchqueren die Lichtstrahlen 4 erneut das fünfte Polarisationsfilter P5 und Treffen nach Durchqueren des Überwachungsbereichs auf den halbdurchlässigen Spiegel 14. Die Lichtstrahlen 4 werden von dem halbdurchlässigen Spiegel 14 um 90° abgelenkt und durchdringen ein drittes Polarisationsfilter P3. Danach treffen die Lichtstrahlen 4 auf den ersten Lichtempfänger E1.

Das Licht der Lichtsender S1 und S2 wird dabei durch die die Polarisationsfilter P5 und P6 vor dem Reflektor R gefiltert. Das Licht der Lichtsender S3 und S4 wird durch unterschiedlich orientierte Abschnitte 6 und 8 der Reflektoren gefiltert. Das Licht der Lichtsender S3 und S4 weist durch die Farbfilter oder Bandpassfilter F1 und F2 Licht unterschiedlicher Wellenlänge auf.

### Bezugszeichen:

1 Reflexionslichtgitter
S1, S2, S3, S4, S5, S6 Lichtsender
E1, E2, E3, E4, E5, E6 Lichtempfänger
2 Gehäuse
R Reflektor
4 Lichtstrahlen
6 erster Abschnitt
8 zweiter Abschnitt
P1 erstes Polarisationsfilter
P2 zweites Polarisationsfilter
P3 drittes Polarisationsfilter
P4 viertes Polarisationsfilter
P5 fünftes Polarisationsfilter
P6 sechstes Polarisationsfilter
F1 Farbfilter, Bandpassfilter
F2 Farbfilter, Bandpassfilter
PR Polarisationsrichtung
10 Optik
12 Reihe
14 halbtransparenter Spiegel
A Abstand zwischen Lichtsender/Lichtempfänger und Reflektor
B Strahlrasterabstand
α1, α2 Sendestrahldivergenz
β1, β2 Empfangskegelwinkel
γ1 Schielwinkel

## Patentansprüche

1. Reflexionslichtgitter mit mehreren Lichtsendern (S1, S2, S3, S4, S5, S6) und mehreren Lichtempfängern (E1, E2, E3, E4, E5, E6) in einem Gehäuse (2)
- und einem gegenüberliegenden retroreflektierenden Reflektor (R), der eingehende Lichtstrahlen (4) parallel zu Ihrer Einfallsrichtung zurückreflektiert,
- wobei der retroreflektierende Reflektor (R) mindestens einen ersten Abschnitt (6) aufweist und mindestens einen zweiten Abschnitt (8) aufweist,
- wobei ein erster Lichtsender (S1), ein erster Lichtempfänger (E) und der erste Abschnitt (6) des Reflektors eine erste Reflexionslichtschranke bilden und ein zweiter Lichtsender (S2), ein zweiter Lichtempfänger (E2) und der zweite Abschnitt (8) des Reflektors (R) eine zweite Reflexionslichtschranke bilden,
**dadurch gekennzeichnet, dass**
- der erste Abschnitt (6) und der zweite Abschnitt (8) unterschiedliche Polarisationseigenschaften aufweisen,
- vor dem ersten Lichtsender (S1) ein erstes Polarisationsfilter (P1) mit einer ersten Polarisationsrichtung und
- vor dem zweiten Lichtsender ein zweites Polarisationsfilter (P2) mit einer zweiten Polarisationsrichtung angeordnet ist,
- vor dem ersten Lichtempfänger (E1) ein drittes Polarisationsfilter (P3) mit einer dritten Polarisationsrichtung und
- vor dem zweiten Lichtempfänger (E2) ein viertes Polarisationsfilter (P4) mit einer vierten Polarisationsrichtung angeordnet ist,
- wobei sich die erste Polarisationsrichtung des ersten Polarisationsfilters (P1) und die Polarisationsrichtung des zweiten Polarisationsfilters (P2) unterscheiden und
- wobei sich die dritte Polarisationsrichtung des dritten Polarisationsfilters (P3) und die vierte Polarisationsrichtung des vierten Polarisationsfilters (P4) unterscheiden
- und die Lichtsender (S1, S2, S3, S4, S5, S6) direkt benachbart in einer Reihe (12) angeordnet sind und die Lichtempfänger (E1, E2, E3, E4, E5, E6) parallel zu den Lichtsendern (S1, S2, S3, S4, S5, S6) direkt benachbart in einer Reihe (12) angeordnet sind
- oder die Lichtsender (S1, S2, S3, S4, S5, S6) und Lichtempfänger (E1, E2, E3, E4, E5, E6) jeweils in zwei Reihen (12) angeordnet sind, wobei sich Lichtsender (S1, S2, S3, S4, S5, S6) und Lichtempfänger (E1, E2, E3, E4, E5, E6) abwechseln und jedem Lichtsender (S1, S2, S3, S4, S5, S6) der einen Reihe (12) ein Lichtempfänger (E1, E2, E3, E4, E5, E6) der anderen Reihe (12) zugeordnet ist.

2. Reflexionslichtgitter nach Anspruch 1, **dadurch gekennzeichnet, dass**
- sich die erste Polarisationsrichtung des ersten Polarisationsfilters (P1) und die Polarisationsrichtung des zweiten Polarisationsfilters (P2) um 45° unterscheiden und
- sich die dritte Polarisationsrichtung des dritten Polarisationsfilters (P3) und die vierte Polarisationsrichtung des vierten Polarisationsfilters (P4) um 45° unterscheiden,
- wobei sich die erste Polarisationsrichtung von dem ersten Polarisationsfilter (P1) und die dritte Polarisationsrichtung von dem dritten Polarisationsfilter (P3) um 90° unterscheiden und
- die zweite Polarisationsrichtung von dem zweiten Polarisationsfilter (P2) und die vierte Polarisationsrichtung von dem vierten Polarisationsfilter (P4) um 90° unterscheiden,
- dass der Reflektor (R) Tripelspiegel aus planen Spiegelflächen aufweist, die jeweils um 90° zueinander angeordnet sind, so dass der Reflektor (R) je nach Orientierung die Polarisationsrichtung von reflektiertem Licht gegenüber dem einfallenden Licht um 90° dreht,
- dass der erste Abschnitt (6) des Reflektors (R) um 90° gegenüber der Polarisationsrichtung des ersten Polarisationsfilters (P1) gedreht ist, so dass maximal viel Licht vom ersten Lichtsender zum ersten Empfänger gelangt und
- der zweite Abschnitt (8) des Reflektors (R) um 90° gegenüber der Polarisationsrichtung des zweiten Polarisationsfilters (P2) gedreht ist, dass maximal viel Licht vom zweiten Lichtsender zum zweiten Empfänger gelangt,
- wobei sich der Drehwinkel des ersten Abschnitts des Reflektors und des zweiten Abschnitts des Reflektors um 45° unterscheiden.

3. Reflexionslichtgitter nach Anspruch 1, **dadurch gekennzeichnet, dass**
- sich die erste Polarisationsrichtung des ersten Polarisationsfilters (P1) und die Polarisationsrichtung des zweiten Polarisationsfilters (P2) um 90° unterscheiden und
- sich die dritte Polarisationsrichtung des dritten Polarisationsfilters (P3) und die vierte Polarisationsrichtung des vierten Polarisationsfilters (P4) um 90° unterscheiden,
- wobei sich die erste Polarisationsrichtung von dem ersten Polarisationsfilter (P1) und die dritte Polarisationsrichtung von dem dritten Polarisationsfilter (P3) nicht unterscheiden und
- die zweite Polarisationsrichtung von dem zweiten Polarisationsfilter (P2) und die vierte Polarisationsrichtung von dem vierten Polarisationsfilter (P4) nicht unterscheiden,
- dass der Reflektor (R) eine linsenähnliche Struktur aufweist, so dass das reflektierte Licht die gleiche Polarisationsrichtung aufweist, wie das einfallende Licht,
- dass vor dem ersten Abschnitt (6) des Reflektors (R) ein fünftes Polarisationsfilter (P5) mit einer fünften Polarisationsrichtung angeordnet ist und
- vor dem zweiten Abschnitt (8) des Reflektors (R) ein sechstes Polarisationsfilter (P6) mit einer sechsten Polarisationsrichtung angeordnet ist,
- wobei sich die fünfte Polarisationsrichtung des fünften Polarisationsfilters (P5) und die sechste Polarisationsrichtung des sechsten Polarisationsfilters (P6) um 90° unterscheiden,
- wobei die Polarisationsrichtung des ersten, dritten und fünften Polarisationsfilters identisch ist und
- die Polarisationsrichtung des zweiten, vierten und sechsten Polarisationsfilters identisch ist.

4. Reflexionslichtgitter nach einem der vorhergehenden Ansprüche, **dadurch gekennzeichnet, dass** die Lichtsender (S1, S2, S3, S4, S5, S6) und/oder die Lichtempfänger (E1, E2, E3, E4, E5, E6) eine Optik (10) aufweisen.

5. Reflexionslichtgitter nach einem der vorhergehenden Ansprüche, **dadurch gekennzeichnet, dass** die Polarisationsfilter (P1, P2, P3, P4, P5, P6) lineare Polarisationsfilter sind.

6. Reflexionslichtgitter nach einem der vorhergehenden Ansprüche, **dadurch gekennzeichnet, dass** die Polarisationsfilter (P1, P2, P3, P4, P5, P6) zirkuläre Polarisationsfilter sind.

7. Reflexionslichtgitter nach einem der vorhergehenden Ansprüche, **dadurch gekennzeichnet, dass** das Sendelicht eines Lichtsenders (S1, S2, S3, S4, S5, S6) nur maximal drei gegenüberliegende Abschnitte (6, 8) des Reflektors (R) trifft.

8. Reflexionslichtgitter nach einem der vorhergehenden Ansprüche, **dadurch gekennzeichnet, dass** Licht unterschiedlicher Lichtsender (S1, S2, S3, S4, S5, S6) unterschiedliche Wellenlängen aufweisen und die zugehörigen Lichtempfänger (E1, E2, E3, E4, E5, E6) nur für diese Wellenlänge empfindlich sind.

9. Reflexionslichtgitter nach einem der vorhergehenden Ansprüche, **dadurch gekennzeichnet, dass** vor den Lichtsendern, den Lichtempfängern und dem Reflektor Farbfilter oder Bandpassfilter (F1, F2) angeordnet sind.

10. Reflexionslichtgitter nach einem der vorhergehenden Ansprüche, **dadurch gekennzeichnet, dass** das Sendelicht eines Lichtsenders (S1, S2, S3, S4, S5, S6) nur maximal fünf gegenüberliegende Abschnitte (6, 8) des Reflektors (R) trifft.

## Claims

1. A reflection light grid comprising a plurality of light transmitters (S1, S2, S3, S4, S5, S6) and a plurality of light receivers (E1, E2, E3, E4, E5, E6) in a housing (2);
- and an oppositely disposed retroreflective reflector (R) that reflects incoming light beams (4) back in parallel with their angle of incidence,
- wherein the retroreflective reflector (R) has at least one first section (6) and has at least one second section (8);
- wherein a first light transmitter (S1), a first light receiver (E), and the first section (6) of the reflector form a first reflection light barrier and a second light transmitter (S2), a second light receiver (E2), and the second section (8) of the reflector (R) form a second reflection light barrier,
**characterized in that**
- the first section (6) and the second section (8) have different polarization properties;
- a first polarization filter (P1) having a first polarization direction is arranged in front of the first light transmitter (S1); and
- a second polarization filter (P2) having a second polarization direction is arranged in front of the second light transmitter;
- a third polarization filter (P3) having a third polarization direction is arranged in front of the first light receiver (E1); and
- a fourth polarization filter (P4) having a fourth polarization direction is arranged in front of the second light receiver (E2),
- with the first polarization direction of the first polarization filter (P1) and the polarization direction of the second polarization filter (P2) differing; and
- with the third polarization direction of the third polarization filter (P3) and the fourth polarization direction of the fourth polarization filter (P4) differing;
- and **in that** the light transmitters (S1, S2, S3, S4, S5, S6) are arranged directly adjacent in a row (12) and the light receivers (E1, E2, E3, E4, E5, E6) are arranged in parallel with the light transmitters (S1, S2, S3, S4, S5, S6) directly adjacent in a row (12);
- or **in that** the light transmitters (S1, S2, S3, S4, S5, S6) and the light receivers (E1, E2, E3, E4, E5, E6) are each arranged in two rows (12), with the light transmitters (S1, S2, S3, S4, S5, S6) and the light receivers (E1, E2, E3, E4, E5, E6) alternating and each light receiver (S1, S2, S3, S4, S5, S6) of the one row (12) having a light receiver (E1, E2, E3, E4, E5, E6) of the other row (12) associated with it.

2. A reflection light grid in accordance with claim 1, **characterized in that**
- the first polarization direction of the first polarization filter (P1) and the polarization direction of the second polarization filter (P2) differ by 45°; and
- the third polarization direction of the third polarization filter (P3) and the fourth polarization direction of the fourth polarization filter (P4) differ by 45°,
- with the first polarization direction from the first polarization filter (P1) and the third polarization direction from the third polarization filter (P3) differing by 90°; and
- with the second polarization direction from the second polarization filter (P2) and the fourth polarization direction from the fourth polarization filter (P4) differing by 90°; and
- **in that** the reflector (R) has triple mirrors of planar mirror surfaces that are each arranged by 90° with respect to one another such that the reflector (R) rotates the polarization direction of reflected light by 90° with respect to the incident light in dependence on the orientation;
- **in that** the first section (6) of the reflector (R) is rotated by 90° with respect to the polarization direction of the first polarization filter (P1) such that a maximum amount of light moves from the first light transmitter to the first receiver; and
- **in that** the second section (8) of the reflector (R) is rotated by 90° with respect to the polarization direction of the second polarization filter (P2) such that a maximum amount of light moves from the second light transmitter to the second receiver,
- with the angle of rotation of the first section of the reflector and of the second section of the reflector differing by 45°.

3. A reflection light grid in accordance with claim 1, **characterized in that**
- the first polarization direction of the first polarization filter (P1) and the polarization direction of the second polarization filter (P2) differ by 90°; and
- the third polarization direction of the third polarization filter (P3) and the fourth polarization direction of the fourth polarization filter (P4) differ by 90°,
- with the first polarization direction from the first polarization filter (P1) and the third polarization direction from the third polarization filter (P3) differing by 90°; and
- with the second polarization direction from the second polarization filter (P2) and the fourth polarization direction from the fourth polarization filter (P4) not differing; and
- **in that** the reflector (R) has a lens-like structure such that the reflected light has the same polarization direction as the incident light;
- **in that** a fifth polarization filter (P5) having a fifth polarization direction is arranged in front of the first section (6) of the reflector (R); and
- **in that** a sixth polarization filter (P6) having a sixth polarization direction is arranged in front of the second section (8) of the reflector (R),
- with the fifth polarization direction of the fifth polarization filter (P5) and the sixth polarization direction of the sixth polarization filter (P6) differing by 90°;
- with the polarization direction of the first, third, and fifth polarization filters being identical; and
- with the polarization of the second, fourth, and sixth polarization filter being identical.

4. A reflection light grid in accordance with any one of the preceding claims, **characterized in that** the light transmitters (S1, S2, S3, S4, S5, S6) and/or the light receivers (E1, E2, E3, E4, E5, E6) has/have an optics.

5. A reflection light grid in accordance with any one of the preceding claims, **characterized in that** the polarization filters (P1, P2, P3, P4, P5, P6) are linear polarization filters.

6. A reflection light grid in accordance with any one of the preceding claims, **characterized in that** the polarization filters (P1, P2, P3, P4, P5, P6) are circular polarization filters.

7. A reflection light grid in accordance with any one of the preceding claims, **characterized in that** the transmitted light of a light transmitter (S1, S2, S3, S4, S5, S6) only impacts a maximum of three oppositely disposed sections (6, 8) of the reflector (R).

8. A reflection light grid in accordance with any one of the preceding claims, **characterized in that** light of different light transmitters (S1, S2, S3, S4, S5, S6) has different wavelengths and the associated light receivers (E1, E2, E3, E4, E5, E6) are only receptive for these wavelengths.

9. A reflection light grid in accordance with any one of the preceding claims, **characterized in that** color filters or band pass filters (F1, F2) are arranged in front of the light transmitters, in front of the light receivers and in front of the reflector.

10. A reflection grid in accordance with any one of the preceding claims, **characterized in that** the transmitted light of a light transmitter (S1, S2, S3, S4, S5, S6) only impacts a maximum of five oppositely disposed sections (6, 8) of the reflector (R).

## Revendications

1. Grille lumineuse à réflexion comportant plusieurs émetteurs de lumière (S1, S2, S3, S4, S5, S6) et plusieurs récepteurs de lumière (E1, E2, E3, E4, E5, E6) dans un boîtier (2),
- et un réflecteur (R) rétro-réfléchissant opposé qui réfléchit des faisceaux lumineux incidents (4) parallèlement à leur direction d'incidence,
- le réflecteur (R) rétro-réfléchissant comprenant au moins une première portion (6) et au moins une seconde portion (8),
- un premier émetteur de lumière (S1), un premier récepteur de lumière (E) et la première portion (6) du réflecteur formant une première barrière lumineuse à réflexion, et un second émetteur de lumière (S2), un second récepteur de lumière (E2) et la seconde portion (8) du réflecteur formant une seconde barrière lumineuse à réflexion,
**caractérisée en ce que**
- la première portion (6) et la seconde portion (8) présentent différentes propriétés de polarisation,
- en avant du premier émetteur de lumière (S1) est agencé un premier filtre polarisant (P1) ayant une première direction de polarisation, et
- en avant du second émetteur de lumière (S2) est agencé un second filtre polarisant (P2) ayant une seconde direction de polarisation, et
- en avant du premier récepteur de lumière (E1) est agencé un troisième filtre polarisant (P3) ayant une troisième direction de polarisation, et
- en avant du second récepteur de lumière (E2) est agencé un quatrième filtre polarisant (P4) ayant une quatrième direction de polarisation,
- la première direction de polarisation du premier filtre polarisant (P1) et la direction de polarisation du second filtre polarisant (P2) se distinguant l'une de l'autre, et
- la troisième direction de polarisation du troisième filtre polarisant (P3) et la quatrième direction de polarisation du quatrième filtre polarisant (P4) se distinguant l'une de l'autre,
- et les émetteurs de lumière (S1, S2, S3, S4, S5, S6) sont agencés directement au voisinage les uns des autres en une rangée (12), et les récepteurs de lumière (E1, E2, E3, E4, E5, E6) sont agencés directement au voisinage les uns des autres en une rangée (12) parallèlement aux émetteurs de lumière (S1, S2, S3, S4, S5, S6),
- ou les émetteurs de lumière (S1, S2, S3, S4, S5, S6) et les récepteurs de lumière (E1, E2, E3, E4, E5, E6) sont agencés en deux rangées respectives (12), les émetteurs de lumière (S1, S2, S3, S4, S5, S6) et les récepteurs de lumière (E1, E2, E3, E4, E5, E6) alternent les uns avec les autres, et à chaque émetteur de lumière (S1, S2, S3, S4, S5, S6) de l'une des rangées (12) est associé un récepteur de lumière respectif (E1, E2, E3, E4, E5, E6) de l'autre rangée (12).

2. Grille lumineuse à réflexion selon la revendication 1,
**caractérisée en ce que**
- la première direction de polarisation du premier filtre polarisant (P1) et la direction de polarisation du second filtre polarisant (P2) se distinguent de 45°, et
- la troisième direction de polarisation du troisième filtre polarisant (P3) et la quatrième direction de polarisation du quatrième filtre polarisant (P4) se distinguent de 45°,
- la première direction de polarisation du premier filtre polarisant (P1) et la troisième direction de polarisation du troisième filtre polarisant (P3) se distinguent de 90°, et
- la seconde direction de polarisation du second filtre polarisant (P2) et la quatrième direction de polarisation du quatrième filtre polarisant (P4) se distinguent de 90°,
- **en ce que** le réflecteur (R) comprend des miroirs triples formés par des surfaces de miroir planes, qui sont agencés à 90° les uns par rapport aux autres, de sorte que le réflecteur (R) tourne de 90° en fonction de l'orientation de la direction de polarisation de la lumière réfléchie par rapport à la lumière incidente,
- **en ce que** la première portion (6) du réflecteur (R) est tournée de 90° par rapport à la direction de polarisation du premier filtre polarisant (P1), de sorte qu'une quantité maximale de lumière parvient depuis le premier émetteur de lumière vers le premier récepteur, et
- la seconde portion (8) du réflecteur (R) est tournée de 90° par rapport à la direction de polarisation du second filtre polarisant (P2), de sorte qu'une quantité maximale de lumière parvient depuis le second émetteur de lumière vers le second récepteur, et
- l'angle de rotation de la première portion du réflecteur et celui de la seconde portion du réflecteur se distinguent de 45°.

3. Grille lumineuse à réflexion selon la revendication 1,
**caractérisée en ce que**
- la première direction de polarisation du premier filtre polarisant (P1) et la direction de polarisation du second filtre polarisant (P2) se distinguent de 90°, et
- la troisième direction de polarisation du troisième filtre polarisant (P3) et la quatrième direction de polarisation du quatrième filtre polarisant (P4) se distinguent de 90°,
- la première direction de polarisation du premier filtre polarisant (P1) et la troisième direction de polarisation du troisième filtre polarisant (P3) ne se distinguent pas, et
- la seconde direction de polarisation du second filtre polarisant (P2) et la quatrième direction de polarisation du quatrième filtre polarisant (P4) ne se distinguent pas,
- **en ce que** le réflecteur (R) présente une structure similaire à une lentille, de sorte que la lumière réfléchie présente la même direction de polarisation que la lumière incidente,
- en avant de la première portion (6) du réflecteur (R) est agencé un cinquième filtre polarisant (P5) avec une cinquième direction de polarisation, et
- en avant de la seconde portion (8) du réflecteur (R) est agencé un sixième filtre polarisant (P6) avec une sixième direction de polarisation, et
- la cinquième direction de polarisation du cinquième filtre polarisant (P5) et la sixième direction de polarisation du sixième filtre polarisant (P6) se distinguent de 90°,
- la direction de polarisation du premier, du troisième et du cinquième filtre polarisant est identique, et
- la direction de polarisation du second, du quatrième et du sixième filtre polarisant est identique.

4. Grille lumineuse à réflexion selon l'une des revendications précédentes, **caractérisée en ce que** les émetteurs de lumière (S1, S2, S3, S4, S5, S6) et/ou les récepteurs de lumière (E1, E2, E3, E4, E5, E6) présentent une optique (10).

5. Grille lumineuse à réflexion selon l'une des revendications précédentes, **caractérisée en ce que** les filtres polarisants (P1, P2, P3, P4, P5, P6) sont des filtres polarisants linéaires.

6. Grille lumineuse à réflexion selon l'une des revendications précédentes, **caractérisée en ce que** les filtres polarisants (P1, P2, P3, P4, P5, P6) sont des filtres polarisants circulaires.

7. Grille lumineuse à réflexion selon l'une des revendications précédentes, **caractérisée en ce que** la lumière émise d'un émetteur de lumière (S1, S2, S3, S4, S5, S6) ne tombe au maximum que sur trois portions opposées (6, 8) du réflecteur (R).

8. Grille lumineuse à réflexion selon l'une des revendications précédentes, **caractérisée en ce que** les lumières de différents émetteurs de lumière (S1, S2, S3, S4, S5, S6) présentent des longueurs d'onde différentes et les récepteurs de lumière associés (E1, E2, E3, E4, E5, E6) ne sont sensibles qu'à cette longueur d'onde.

9. Grille lumineuse à réflexion selon l'une des revendications précédentes, **caractérisée en ce qu'**en avant des émetteurs de lumière, en avant des récepteurs de lumière et en avant du réflecteur, il est prévu des filtres couleurs ou des filtres passe-bande (F1, F2).

10. Grille lumineuse à réflexion selon l'une des revendications précédentes, **caractérisée en ce que** la lumière émise d'un émetteur de lumière (S1, S2, S3, S4, S5, S6) ne tombe au maximum que sur cinq portions opposées (6, 8) du réflecteur (R).
